# DEMANDE DE BREVET EUROPEEN

(11) **EP 1 677 219 A2**
(43) Date de publication de la demande: **05.07.2006**
(21) Numéro de dépôt: 05301127.6
(22) Date de dépôt: 30.12.2005
(51) Int. Cl.: G06F 17/30

(54) **Indexation par transposition de matrice de grande dimension**

(30) Priorité: 04.01.2005 FR 0500055
(71) Demandeur: FRANCE TELECOM, 75015 Paris (FR)
(72) Inventeur: LASSALLE, Edmond, 22300, LANNION (FR)
(74) Mandataire: Cabinet Martinet & Lapoux

(57) **Abrégé**

Un système informatique (SI) comporte une première mémoire (MC) et une deuxième mémoire (DD) incluant une matrice directe creuse comportant des cases pleines mémorisant une donnée et un indice de colonne et adressables consécutivement. Un module (MoD) dimensionne une matrice transposée, en lisant ligne par ligne des indices de colonne de la matrice directe afin de réserver des cases de la matrice transposée dans la deuxième mémoire. Un module (MoI) identifie dans la première mémoire une sous-matrice de cases réservées de la matrice transposée et occupant un espace de mémoire inférieur à la première mémoire. Un module (MoR) remplit les cases de la sous-matrice selon les indices de colonne lus dans les cases de la matrice directe, et transfère la sous-matrice dans la deuxième mémoire pour remplir la matrice transposée.

## Description

La présente invention concerne un procédé d'indexation par transposition de matrice de grande dimension. Plus particulièrement elle a trait à un procédé rapide d'indexation à chaque élément nouveau à indexer.

Bien que la mémoire centrale d'un système informatique soit ordonnée de manière séquentielle, la représentation d'une matrice à L lignes et C colonnes et son adressage ne posent pas de problème lorsque tous les éléments de la matrice sont respectivement associés à des cases en mémoire selon une représentation matricielle dite matrice "pleine". Chaque ligne [L] (ou colonne) de la matrice contient des éléments matriciels, dits premiers éléments, et chaque colonne [C] (ou ligne) de la matrice contient des éléments matriciels, dits deuxièmes éléments. Le passage d'une représentation à deux dimensions [L, C] correspondant à la matrice à une représentation à une dimension correspondant à la mémoire centrale comporte un rangement des cases de chaque ligne de la matrice en mémoire centrale de manière contiguë et une mémorisation de la matrice entière par mémorisation contiguë des lignes de la matrice. Ainsi connaissant les dimensions de la matrice [L, C], un simple décalage permet d'accéder à toute case de la matrice.

Par exemple dans une base documentaire, l'indexation de documents correspond à un croisement matriciel entre d'un côté l'ensemble des documents en tant que premiers éléments et de l'autre un ensemble de mots figurant dans les documents en tant que deuxièmes éléments. Ce croisement est représenté sous la forme d'une matrice [mots, documents]. Chaque case de cette matrice inclut une donnée indiquant la présence ou l'absence d'un mot dans un document. Dans la pratique, du fait du nombre élevé de documents à indexer, par exemple 10 000 à quelques giga et de la taille du vocabulaire, par exemple 20 000 à un million, une représentation par matrice pleine n'est pas envisageable.

Une représentation par matrice creuse comportant des cases ne mémorisant que des données "significatives", dites cases pleines, est plus adaptée. L'absence de mots étant plus fréquente que la présence de mots au sein de chaque document, une représentation économique par matrice creuse peut consister à ne conserver en mémoire que les cases indiquant la présence de mots dans le document, c'est-à-dire que les cases pleines.

Cependant la représentation par matrice creuse ne privilégie qu'un mode d'accès dans la mémoire centrale par ligne entière exclusivement ou par colonne entière exclusivement, par opposition à la représentation par matrice pleine qui permet un accès indifférencié par ligne entière ou par colonne entière. Dans l'exemple précédent de la base documentaire, un accès dans la mémoire centrale exclusivement par ligne ou par colonne rend difficile la détermination réciproque de tous les documents qui contiennent un mot donné et de tous les mots figurant dans un document donné. En effet, la mémoire centrale mémorise exclusivement soit chaque document comme un fichier contenant une suite de mots, cette mémorisation étant également appelée représentation à fichier direct, soit chaque mot comme une liste identifiant les documents qui contiennent ce mot, appelée représentation à fichier inverse.

D'autres procédés d'indexation se basent sur des tables de hachage. Une table de hachage est une table d'association à clé unique dont le nombre de case est fixe et dont les cases sont accessibles indirectement par une valeur entière de hachage de la clé. Une fonction de hachage h associe respectivement des valeurs entières de hachage à des clés. Une clé est rangée au rang h(clé) dans la table. L'inconvénient de cette indexation est que plusieurs clés peuvent être associée à la même valeur entière par la fonction de hachage h, impliquant ainsi une collision et la suppression d'une des deux clés. Dans une base documentaire indexée par une table de hachage, la collision de clés induit une perte de près de dix pour-cent des documents indexés. Il est possible d'utiliser une table de hachage sans collision. En cas de clé identique, la nouvelle clé est utilisée dans une sous-table de hachage et ainsi de suite jusqu'à l'obtention d'une nouvelle clé unique. Une table de hachage sans collision est plus coûteuse en espace mémoire et en longueur de clé. En outre, une telle indexation rend difficile une vue globale indifférenciée des documents et des mots. Un autre inconvénient est induit par la saisie de documents nouveaux à indexer qui engendre un temps important d'actualisation de l'indexation de tous les éléments mémorisés et à mémoriser dans la table de hachage.

L'invention a pour objectif d'indexer de manière globale et indifférenciée des premiers éléments à des deuxièmes éléments et réciproquement par création d'un fichier inverse d'indexation à partir d'un fichier direct d'indexation. L'invention actualise rapidement l'indexation d'éléments nouveaux dès leur saisie dans une mémoire de capacité élevée et d'accès en écriture-lecture relativement lent.

Pour atteindre cet objectif, un procédé d'indexation est mis en oeuvre dans un système informatique qui comporte une première mémoire et une deuxième mémoire incluant une matrice directe creuse n'ayant que des cases pleines et issue d'une matrice de cases pleines et vides. Les cases de la matrice directe mémorisent chacune une donnée et un indice de colonne associés. Le procédé est caractérisé en ce qu'il comprend les étapes de:
dimensionner ligne par ligne une matrice transposée de la matrice directe, en lisant ligne par ligne des indices de colonne de la matrice directe afin de réserver autant de cases pour chaque ligne de la matrice transposée dans la deuxième mémoire qu'un nombre d'occurrences d'un indice de colonne respectif dans la matrice directe;
identifier dans la première mémoire une sous-matrice de cases réservées formant avec d'autres sous-matrices consécutives la matrice transposée, chaque sous-matrice occupant un espace de mémoire inférieur à la taille de la première mémoire;
remplir les cases de la sous-matrice dans la première mémoire avec des données associées à des indices de colonne lus dans les cases de la matrice directe dans la deuxième mémoire et identiques à des indices de ligne de la matrice transposée relatifs à des lignes incluses dans la sous-matrice;
transférer la sous-matrice remplie de la première mémoire à la deuxième mémoire afin de remplir la matrice transposée; et
réitérer les trois étapes précédentes pour chacune des sous-matrices de la matrice transposée.

Dans le sens de l'invention et selon la réciprocité des matrices, les lignes peuvent être des colonnes et les colonnes des lignes.

Le procédé de l'invention crée une matrice transposée à partir d'une matrice directe afin d'indexer des premiers éléments à des deuxièmes éléments et d'obtenir une vue globale desdits éléments lors de la recherche d'un premier élément ou d'un deuxième élément.

Le procédé de l'invention a pour avantage de s'appliquer sur des matrices de grandes dimensions.

Selon le procédé, chaque sous-matrice inclut une ou plusieurs lignes complètes de la matrice transposée. Les cases réservées dans une ligne de la matrice transposée sont adressables en fonction d'un indice de ligne de la matrice transposée qui est identique à un indice de colonne lu dans des cases de la matrice directe.

L'invention est relative également à un système informatique pour la mise en oeuvre d'un procédé d'indexation, ledit système comportant une première mémoire et une deuxième mémoire incluant une matrice directe creuse n'ayant que des cases pleines et issue d'une matrice de cases pleines et vides, les cases de la matrice directe mémorisant une donnée et un indice de colonne associés. Le système est caractérisé en ce qu'il comprend :
un moyen pour dimensionner ligne par ligne une matrice transposée de la matrice directe, en lisant ligne par ligne des indices de colonne de la matrice directe afin de réserver autant de cases pour chaque ligne de la matrice transposée dans la deuxième mémoire qu'un nombre d'occurrences d'un indice de colonne respectif dans la matrice directe;
un moyen pour identifier dans la première mémoire une sous-matrice de cases réservées formant avec d'autres sous-matrices consécutives la matrice transposée, chaque sous-matrice occupant un espace de mémoire inférieur à la taille de la première mémoire; et
un moyen pour remplir les cases de la sous-matrice dans la première mémoire avec des données associées à des indices de colonne lus dans les cases de la matrice directe dans la deuxième mémoire et identiques à des indices de ligne de la matrice transposée relatifs à des lignes incluses dans la sous-matrice afin de transférer la sous-matrice remplie de la première mémoire à la deuxième mémoire.

Le procédé de l'invention prend une à deux minutes pour déterminer la matrice transposée en fonction de la matrice directe dès la saisie de nouveaux éléments. La matrice transposée est construite progressivement dans la première mémoire, telle qu'une mémoire centrale de processeur, permettant ainsi des accès discontinus plus rapides que dans la deuxième mémoire qui est de préférence un périphérique de stockage de capacité élevée, par exemple un disque dur. La matrice directe, quant à elle, est lue en continue dans la deuxième mémoire permettant un traitement plus rapide.

Enfin, l'invention se rapporte à un programme d'ordinateur apte à être mis en oeuvre sur le système informatique, ledit programme comprenant des instructions adaptées à la mise en oeuvre du procédé d'indexation par transposition de matrice qui, lorsque le programme est chargé et exécuté sur ledit système informatique, réalisent les étapes du procédé de l'invention.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la figure 1 est un bloc-diagramme schématique d'un système informatique mettant en oeuvre le procédé de l'invention;
- la figure 2 montre une matrice directe pleine;
- la figure 3 montre une matrice transposée pleine;
- la figure 4 montre une transformation d'une matrice directe creuse en une matrice transposée creuse en rapport avec les matrices selon les figures 2 et 3; et
- la figure 5 est un algorithme du procédé d'indexation selon l'invention.

Pour indexer des premiers éléments à des deuxièmes éléments et réciproquement, l'invention crée à partir d'un fichier direct, dit également matrice directe, mémorisant les premiers éléments par rapport aux deuxièmes éléments un fichier inverse, dit matrice transposée de la matrice directe, le fichier inverse mémorisant les deuxièmes éléments par rapport aux premiers éléments.

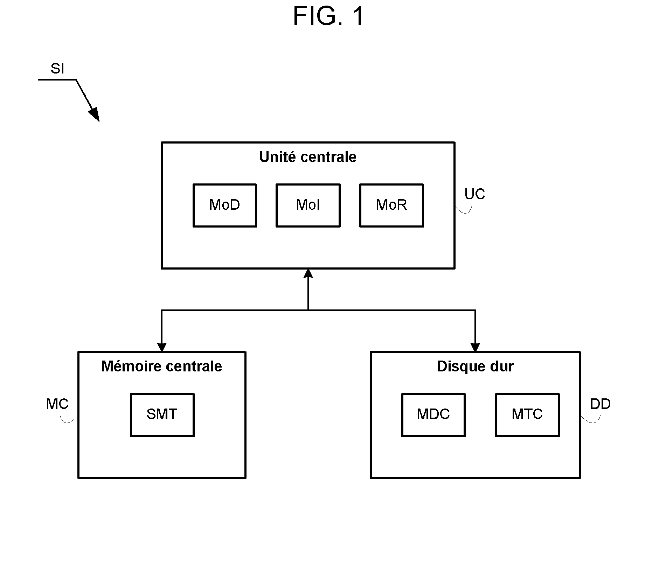

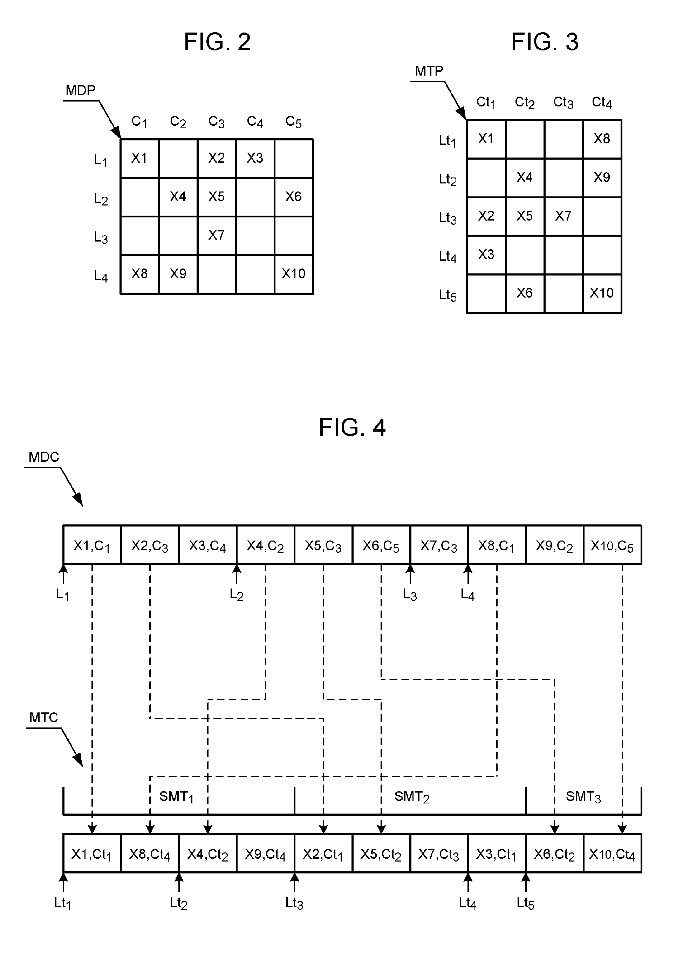

En référence à la figure 1, le système informatique SI met en oeuvre le procédé d'indexation de l'invention. Le système informatique SI est par exemple un ordinateur de type serveur de gestion de base de données interrogeable à travers un réseau de télécommunications pour rechercher des documents numériques en fonction d'une requête incluant des mots à l'aide d'une matrice transposée selon l'invention après avoir analysé et classé les documents en fonction des mots selon une matrice directe. Le système informatique SI comporte une unité centrale de traitement UC, telle qu'un processeur, contrôlant l'exécution du procédé d'indexation et reliée par un bus à des première et deuxième mémoires. La première mémoire est une mémoire centrale MC du système, telle qu'une mémoire non volatile EEPROM enregistrant des instructions et des données. La deuxième mémoire est un périphérique de stockage comprenant un support d'enregistrement comme un disque dur DD, et ayant une capacité nettement supérieure à celle de la première mémoire MC et dont l'accès discontinu écriture-lecture est moins rapide que celui de la première mémoire. Le disque dur DD contient initialement une matrice dite matrice directe creuse MDC dans la suite de la description, illustrée à la figure 4. La matrice directe creuse est issue d'une matrice directe pleine MDP comportant L lignes et C colonnes.

L'unité centrale UC crée, détermine et enregistre une matrice transposée creuse MTC à partir de la matrice directe creuse MDC dans le disque dur DD. A cause de leur taille importante, les matrices creuses MDC et MTC ne sont pas mémorisées dans la mémoire centrale MC mais dans le disque dur DD. Cependant, la transformation de la matrice MDC en la matrice MTC par l'unité centrale UC comprend des accès discontinus aux lignes des matrices dans le disque dur ce qui est très pénalisant en temps de traitement. En effet, la technologie des disques durs favorise des lecture et écriture séquentielles. Pour optimiser le temps de traitement, des accès séquentiels ligne par ligne sont effectués pour une lecture continue de la matrice directe MDC et une écriture continue partielle de la matrice transposée MTC sur le disque dur DD. Pour écrire de manière discontinue toute la matrice transposée MTC, l'unité centrale décompose progressivement celle-ci en sous-matrices SMT qui sont formées les unes après les autres dans la mémoire centrale MC.

Pour transformer la matrice directe MDC en la matrice transposée MTC, l'unité centrale UC comprend un module de dimensionnement MoD pour dimensionner la matrice MTC, un module d'indentification MoI pour identifier des sous-matrices SMT formant la matrice MTC et un module de remplissage MoR pour remplir des cases des sous-matrices SMT. Ces trois modules sont des modules logiciels fonctionnels détaillés dans la suite de la description.

De manière générale, une matrice pleine est représentée par des premières rangées, lignes ou colonnes, définies par des premiers indices et par des deuxièmes rangées, colonnes ou lignes, définies par des deuxièmes indices. L'intersection de chacune des premières rangées avec chacune des deuxièmes rangées forme des cases pleines ou vides.

En référence à des exemples de matrice à 20 cases montrés aux figures 2 et 3, des lignes L₁ à L₄ en tant que premières rangées d'une matrice directe pleine MDP de dimension 4x5 comprennent des premiers éléments et les colonnes C₁ à C₅ en tant que deuxièmes rangées comprennent des deuxièmes éléments. Chaque case pleine de la matrice MDP comporte une donnée X. Inversement à la représentation de la matrice directe pleine, des lignes Lt₁ à Lt₅ en tant que premières rangées de la matrice transposée pleine MTP de dimension 5x4 résultant de la transposition de la matrice MDP comprennent les deuxièmes éléments et les colonnes Ct₁ à Ct₄ en tant que deuxième rangée de la matrice MTP comprennent les premiers éléments. La matrice directe pleine MDP et la matrice transposée pleine MTP ont le même nombre de case mémorisant les mêmes données.

La matrice directe creuse MDC, illustrée sur la figure 4 et enregistrée dans le disque dur DD, est issue de la matrice directe pleine MDP représentée sur la figure 2 et ne comporte que des cases pleines et donc ne comporte pas de case vide. Les cases de la matrice creuse MDC sont adressées consécutivement dans le disque dur DD et forment des lignes consécutives en tant que premières rangées de la matrice creuse par lecture des cases pleines des lignes de la matrice directe pleine MDP, en sautant les cases vides. Chaque case de la matrice creuse MDC ainsi mémorisée contient une donnée, par exemple X1 et un indice de colonne, appelé également indice de deuxième rangée, par exemple C₁, correspondant à l'indice de la colonne de la matrice directe pleine MDP contenant ladite donnée. Ainsi lors d'une lecture continue de la matrice directe creuse MDC, l'unité centrale UC décale un pointeur dans le disque dur pour accéder successivement ligne par ligne aux cases de ladite matrice directe creuse. Ce décalage est également mis en oeuvre pour l'écriture continue de la matrice transposée creuse MTC dans le disque dur.

De manière réciproque, pour former consécutivement les colonnes de la matrice creuse, les cases de la matrice creuse MDC sont adressables consécutivement en mémoire par lecture des cases pleines des colonnes de la matrice directe pleine MDP. Chaque case de la matrice creuse MDC ainsi mémorisée contient une donnée et un indice de ligne correspondant à l'indice de ligne de la matrice directe pleine MDP contenant ladite donnée.

Dans la suite de la description, on se réfère à la première représentation par ligne montrée à la figure 4.

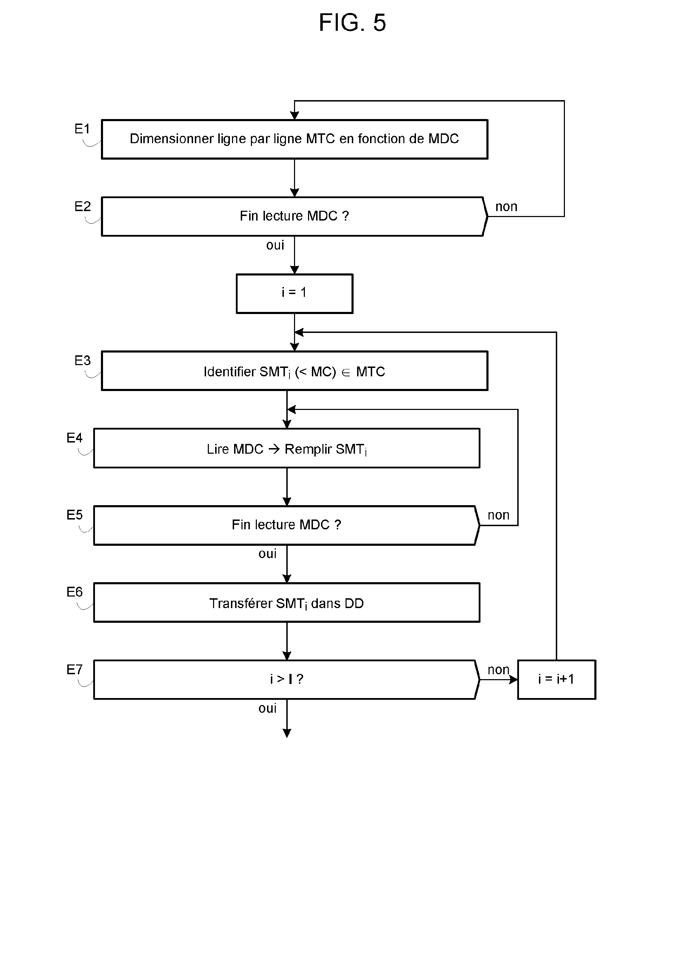

Comme montré à la figure 5, le procédé d'indexation par transposition de matrice selon l'invention comprend des étapes E1 à E7. Le disque dur DD du système informatique SI a enregistré initialement la matrice directe creuse MDC mémorisée comme illustrée selon l'exemple de la figure 4. Des caractéristiques de la matrice directe creuse MDC telles que le nombre de lignes L et le nombre de colonnes C de celle-ci sont donc initialement enregistrées dans le disque dur et lisibles par l'unité centrale.

A la première étape E1, le module de dimensionnement MoD de l'unité centrale UC dimensionne ligne par ligne la matrice MTC transposée de la matrice directe MDC en fonction des caractéristiques de la matrice directe MDC. Le dimensionnement consiste pour chaque ligne de la matrice transposée à rechercher un indice de colonne identique à l'indice de ladite ligne de la matrice transposée en lisant ligne par ligne de manière continue toutes les cases de la matrice directe MDC mémorisée dans le disque dur DD. Pour chaque indice de colonne C lu, le module de dimensionnement MoD compte le nombre d'occurrence de cet indice de colonne dans la matrice directe MDC et dimensionne une ligne de la matrice transposée MTC en réservant dans le disque dur DD autant de cases que le nombre d'occurrence d'indice de colonne. Toutes les cases de la ligne dimensionnée de la matrice transposée MTC sont adressables par un indice de ligne Lt de la matrice transposée égal à l'indice de colonne C de la matrice directe MDC, le nombre de lignes Lt de la matrice transposée MTC, par exemple 5, étant identique au nombre de colonnes C de la matrice directe MDC.

Par exemple en se référant à la figure 4, à la lecture de la première case de la matrice directe MDC incluant l'indice colonne C₁, le module de dimensionnement MoD réserve dans le disque dur DD une case adressable en fonction de l'indice de ligne Lt₁ de la matrice transposée MTC et met à 1 un compte de case pour la première ligne Lt₁ de la matrice transposée. Ultérieurement, lors de lectures de la première case de la ligne L₄ dans la matrice MDC, le module MoD réserve encore une case pour la ligne Lt₁ de la matrice MTC et le compte pour la ligne Lt₁ est égal à la dimension 2 de la ligne Lt₁. A la suite de la lecture de la première case de la matrice directe MDC, le module de dimensionnement lit la deuxième case de la matrice directe MDC comportant l'indice de colonne C₃, réserve dans le disque dur DD une case adressable en fonction de l'indice de ligne Lt₃ de la matrice transposée MTC MTC et met à 1 un compte de case pour la troisième ligne Lt₃ de la matrice transposée. Ultérieurement, lors de lectures de la deuxième case de la ligne L₂ et de la case de la ligne L₃ dans la matrice MDC, le module MoD réserve encore deux cases pour la ligne Lt₃ de la matrice MTC et le compte pour la ligne Lt₃ est égal à la dimension 3 de la ligne Lt₃.

Une fois que toutes les cases de la matrice directe MDC sont lues à l'étape E2, les lignes Lt de la matrice transposée MTC sont toutes dimensionnées et réservées dans le disque dur DD. L'unité centrale réitère ensuite I fois un ensemble d'étapes E3 à E7.

A l'étape E3, le module d'identification MoI de l'unité centrale UC identifie en fonction de la taille de la mémoire centrale MC une sous-matrice de cases réservées SMTi qui avec d'autres sous-matrices consécutives identifiées itérativement SMT₁ à SMT_{I} forme la matrice transposée MTC, avec 1 ≤ i ≤ I et I le nombre total de sous-matrices composant la matrice MTC. Chaque sous-matrice SMTᵢ a une dimension telle qu'elle occupe un espace de mémoire prédéterminé inférieur à la taille de la mémoire centrale MC, de préférence sensiblement égale à la taille de la mémoire centrale, et inclut au moins une ligne complète et plus généralement des lignes complètes consécutives de la matrice transposée MTC.

La figure 4 représente un exemple de matrice transposée MTC formée par trois sous-matrices SMT₁, SMT₂ et SMT₃. Les dimensions des sous-matrices peuvent être différentes, sont au moins égales à la plus petite dimension des lignes de la matrice transposée MTC déterminée à l'étape E2, et sont respectivement égales à la somme de dimensions, c'est-à-dire la somme de nombres de cases dans des lignes entières de la matrice transposée MTC, tout en demeurant inférieures au nombre de cases que peut contenir la mémoire centrale. Les adresses des cases de chaque sous-matrice SMTi sont bornées par le plus petit et le plus grand des indices successifs des lignes de la sous-matrice, qui peuvent éventuellement être confondus lorsque la sous-matrice ne comprend qu'une ligne. Par exemple à la figure 4, les adresses des cases de la sous-matrice SMT₁ sont bornées par les indices 1 et 2 des lignes Lt₁ et Lt₂. Une case de la matrice transposée MTC est traitée en mémoire centrale MC si elle est adressée en fonction de l'indice d'une ligne Lt compris entre les deux indices de ligne bornant la sous-matrice SMT. Les indices de lignes Lt définissant la sous-matrice SMT dans la matrice transposée MTC correspondent à des indices de colonnes C dans la matrice directe MD.

Après que le module d'identification ait prévu un espace de mémoire pour la sous-matrice de cases réservées identifiée courante SMTi dans la mémoire centrale MC, le module de remplissage MoR de l'unité centrale UC remplit les cases de la sous-matrice SMTi à l'étape E4, par lecture continue des données dans les cases successives de la matrice directe MDC enregistrée dans le disque dur DD et par écriture discontinue mais ordonnée dans les cases réservées correspondantes de la sous-matrice SMTi dans la mémoire centrale MC des données lues et d'indices de colonne Ct de la sous-matrice SMTi. Pour chaque case de chaque ligne L de la matrice directe MDC, si l'indice de colonne C de la matrice directe MDC est identique à l'indice d'une ligne Lt de la matrice transposée relatif à une ligne incluse dans la sous-matrice identifiée SMTᵢ, alors le module de remplissage MoR mémorise dans une case de la ligne Lt de la sous-matrice SMTi la donnée X associée à l'indice de colonne C lu dans la case de la matrice directe et mémorise également dans cette case un indice de colonne Ct identique à l'indice de la ligne L de la matrice MDC incluant la case qui est lue par le module MoR.

Par exemple en relation à la figure 4, la sous-matrice identifiée SMTi est la sous-matrice identifiée SMT₁ dans la mémoire centrale MC et comportant quatre cases. A la lecture continue des cases de la matrice directe MDC, le module de remplissage MoR identifie l'indice de colonne C₁ de la première case de la ligne L de la matrice MDC comme comprise entre les indices de ligne Lt₁ et Lt₂ de la sous-matrice SMT₁. Le module de remplissage MoR mémorise dans la première case de la ligne Lt₁ de la sous-matrice SMT₁ la donnée X1 associée à l'indice de colonne C₁ et l'indice de colonne Ct₁ identique à l'indice de ligne L₁ de la matrice MDC. A la lecture de la deuxième case de la matrice directe MDC, le module de remplissage identifie l'indice de colonne C₃ comme non compris entre les indices de lignes Lt₁ et Lt₂ de la sous-matrice SMT₁, et ne mémorise pas l'indice de colonne C₃. A la fin de la lecture de la matrice directe MDC, toutes les quatre cases de la sous-matrice SMT₁ sont remplies. Chaque case de la sous-matrice SMT₁ une fois remplie comprend une donnée X et un indice de colonne Ct.

A la fin, étape E5, de la lecture de la matrice directe MDC, le module de remplissage MoR transfère la sous-matrice remplie SMTi dans le disque dur DD, à l'étape E6.

Une sous-matrice suivante SMTᵢ₊₁ comportant des cases réservées et contiguë à la sous-matrice précédente SMTi dans la matrice MTC est ensuite identifiée par le module d'identification MoI dans la mémoire centrale MC pour y être remplie par le module de remplissage MoR. Les étapes E3 à E6 sont réitérées à l'étape E7, jusqu'à l'écriture totale et l'enregistrement de la matrice transposée MTC dans le disque dur DD. La matrice transposée MTC enregistrée dans le disque dur DD comprend autant de cases que la matrice directe MDC également enregistrée sur le disque dur DD.

L'invention décrite ici concerne un procédé et un système informatique d'indexation par transposition de matrice de grande dimension. Selon une implémentation préférée, les étapes du procédé sont déterminées par les instructions d'un programme incorporé dans en mémoire de l'unité centrale du système informatique tel qu'un serveur de données ou un ordinateur. Le programme comporte des instructions de programme qui, lorsque ledit programme est chargé et exécuté dans le système informatique dont le fonctionnement est alors commandé par l'exécution du programme, réalisent les étapes du procédé selon l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'informations peut être un circuit intégré dans lequel le programme est incorporé, le circuit étant adapté pour exécuter ou pour être utilisé dans l'exécution du procédé selon l'invention.

## Revendications

1. Procédé d'indexation dans un système informatique (SI) comportant une première mémoire (MC) et une deuxième mémoire (DD) incluant une matrice directe creuse (MDC) n'ayant que des cases pleines et issue d'une matrice (MDP) de cases pleines et vides, les cases de la matrice directe mémorisant chacune une donnée (X) et un indice de colonne (C) associés, **caractérisé en ce qu'**il comprend les étapes de:
dimensionner (E1) ligne par ligne une matrice transposée (MTC) de la matrice directe, en lisant ligne par ligne des indices de colonne de la matrice directe (MDC) afin de réserver autant de cases pour chaque ligne (Lt) de la matrice transposée dans la deuxième mémoire (DD) qu'un nombre d'occurrences d'un indice de colonne respectif dans la matrice directe;
identifier (E3) dans la première mémoire (MC) une sous-matrice (SMTᵢ) de cases réservées formant avec d'autres sous-matrices consécutives la matrice transposée, chaque sous-matrice occupant un espace de mémoire inférieur à la taille de la première mémoire;
remplir (E4) les cases de la sous-matrice dans la première mémoire (MC) avec des données associées à des indices de colonne lus dans les cases de la matrice directe (MDC) dans la deuxième mémoire (DD) et identiques à des indices de ligne de la matrice transposée relatifs à des lignes incluses dans la sous-matrice;
transférer (E6) la sous-matrice remplie de la première mémoire à la deuxième mémoire afin de remplir la matrice transposée (MTC); et
réitérer (E7) les trois étapes précédentes pour chacune des sous-matrices de la matrice transposée.

2. Procédé conforme à la revendication 1, selon lequel chaque sous-matrice (SMTi) inclut au moins une ligne complète de la matrice transposée.

3. Procédé conforme à la revendication 1 ou 2, selon lequel les cases réservées dans une ligne (Lt) de la matrice transposée sont adressables en fonction d'un indice de ligne de la matrice transposée (MTC) qui est identique à un indice de colonne (C) lu dans des cases de la matrice directe (MDC).

4. Procédé conforme à l'une quelconque des revendications 1 à 3, selon lequel lors du remplissage (E4) d'une sous-matrice (SMTi) de la matrice transposée et pour chaque case lue de chaque ligne (L) de la matrice directe (MDC), si l'indice de colonne (C) de la matrice directe est identique à l'indice d'une ligne de la matrice transposée relatif à une ligne (Lt) incluse dans ladite sous-matrice (SMTi), alors la donnée (X) associée à l'indice de colonne (C) lu dans la case de la matrice directe et un indice de colonne (Ct) identique à l'indice de la ligne (L) incluant la case lue sont mémorisés dans une case de la ligne (Lt) de la sous-matrice (SMTi).

5. Système informatique (SI) pour la mise en oeuvre d'un procédé d'indexation, ledit système comportant une première mémoire (MC) et une deuxième mémoire (DD) incluant une matrice directe creuse (MDC) n'ayant que des cases pleines et issue d'une matrice (MDP) de cases pleines et vides, les cases de la matrice directe mémorisant une donnée (X) et un indice de colonne (C), **caractérisé en ce qu'**il comprend :
un moyen (MoD) pour dimensionner ligne par ligne une matrice transposée (MTC) de la matrice directe, en lisant ligne par ligne des indices de colonne de la matrice directe (MDC) afin de réserver autant de cases pour chaque ligne (Lt) de la matrice transposée dans la deuxième mémoire (DD) qu'un nombre d'occurrences d'un indice de colonne (C) respectif dans la matrice directe;
un moyen (MoI) pour identifier dans la première mémoire (MC) une sous-matrice (SMTᵢ) de cases réservées formant avec d'autres sous-matrices consécutives la matrice transposée, chaque sous-matrice occupant un espace de mémoire inférieur à la taille de la première mémoire; et
un moyen (MoR) pour remplir les cases de la sous-matrice dans la première mémoire (MC) avec des données associées à des indices de colonne lus dans les cases de la matrice directe (MDC) dans la deuxième mémoire (DD) et identiques à des indices de ligne de la matrice transposée relatifs à des lignes incluses dans la sous-matrice afin de transférer la sous-matrice remplie de la première mémoire à la deuxième mémoire.

6. Système informatique conforme à la revendication 5, dans lequel la première mémoire est une mémoire centrale de processeur (MC) et la deuxième mémoire est un périphérique de stockage (DD).

7. Programme d'ordinateur apte à être chargé sur un système informatique comportant une première mémoire (MC) et une deuxième mémoire (DD) incluant une matrice directe creuse (MDC) n'ayant que des cases pleines et issue d'une matrice (MDP) de cases pleines et vides, les cases de la matrice directe mémorisant chacune une donnée (X) et un indice de colonne (C) associés, ledit programme comprenant des instructions adaptées à la mise en oeuvre d'un procédé d'indexation par transposition de matrice qui, lorsque le programme est chargé et exécuté sur ledit système informatique, réalisent les étapes de:
dimensionner (E1) ligne par ligne une matrice transposée (MTC) de la matrice directe, en lisant ligne par ligne des indices de colonne de la matrice directe (MDC) afin de réserver autant de cases pour chaque ligne (Lt) de la matrice transposée dans la deuxième mémoire (DD) qu'un nombre d'occurrences d'un indice de colonne (C) respectif dans la matrice directe;
identifier (E3) dans la première mémoire (MC) une sous-matrice (SMTi) de cases réservées formant avec d'autres sous-matrices consécutives la matrice transposée, chaque sous-matrice occupant un espace de mémoire inférieur à la taille de la première mémoire;
remplir (E4) les cases de la sous-matrice dans la première mémoire (MC) avec des données associées à des indices de colonne lus dans les cases de la matrice directe (MDC) dans la deuxième mémoire (DD) et identiques à des indices de ligne de la matrice transposée relatifs à des lignes incluses dans la sous-matrice;
transférer (E6) la sous-matrice remplie de la première mémoire à la deuxième mémoire afin de remplir la matrice transposée (MTC); et
réitérer (E7) les trois étapes précédentes pour chacune des sous-matrices de la matrice transposée.
